# EUROPÄISCHE PATENTSCHRIFT

(11) **EP 3 137 335 B1**
(45) Veröffentlichungstag und Bekanntmachung des Hinweises auf die Patenterteilung: **13.07.2022**
(21) Anmeldenummer: 15718159.5
(22) Anmeldetag: 07.04.2015
(51) Int. Cl.: B60L 58/18, B60L 1/00, B60L 58/12, B60L 58/20

(54) **BATTERIESTEUERUNG FÜR ELEKTRISCH ANGETRIEBENES FAHRZEUG OHNE NIEDERVOLTBATTERIE, ELEKTRISCH GETRIEBENES FAHRZEUG MIT DIESER STEUERUNG UND VERFAHREN**
CONTROL FOR ELECTRICALLY DRIVEN VEHICLE, ELECTRICALLY DRIVEN VEHICLE HAVING CONTROL, AND METHOD
COMMANDE POUR VÉHICULE À ENTRAÎNEMENT ÉLECTRIQUE, VÉHICULE À ENTRAÎNEMENT ÉLECTRIQUE COMPORTANT UNE COMMANDE ET PROCÉDÉ

(30) Priorität: 30.04.2014 DE 102014208117
(43) Veröffentlichungstag der Anmeldung: 08.03.2017
(73) Patentinhaber: Bayerische Motoren Werke Aktiengesellschaft, 80809 München (DE)
(72) Erfinder: LOPEZ DE ARROYABE, Jose, 81541 München (DE)
(86) Internationale Anmeldenummer: PCT/EP2015/057467
(87) Internationale Veröffentlichungsnummer: WO 2015/165693

(56) Entgegenhaltungen:
- DE-A1-102011 003 605
- US-A- 3 343 073
- US-A1- 2004 130 214

## Beschreibung

Die Erfindung betrifft eine Steuerung für ein elektrisch getriebenes Fahrzeug, eine elektrisch getriebenes Fahrzeug mit einer Steuerung und Verfahren zur Steuerung elektrisch getriebener Fahrzeuge.

### HINTERGRUND

Bekannte elektrisch angetriebene Fahrzeuge, wie Elektrofahrzeuge oder Hybridfahrzeuge verwenden üblicherweise für den Antrieb eine erste Batterie, auch Hochspannungsbatterie, welche die Spannung von bspw. 300 V und natürlich den Strom für den Antrieb des Elektrofahrzeugs bereitstellt. Die erste Batterie weist eine Vielzahl in Reihe geschalteter Batteriezellen auf. Ferner ist eine weitere Batterie, auch Starter- oder Ersatzbatterie vorgesehen, welche die üblichen Steuergeräte, wie das Antiblockiersystem (ABS), ein Karosseriesteuergerät, das unterschiedliche Fahrzeugfunktionen wie die elektrischen Fensterheber, Scheinwerfer und Rückleuchten steuert und überwacht, aber auch Reifendruck oder schlüssellose Zutrittskontrolle (kurz: Body-Controller), die Blinkanlage usw. zumindest vorübergehende unabhängig von der ersten Batterie mit einer geringeren Spannung von bspw. 12 V versorgen kann. Ferner ist ein DC/DC-Wandler vorhanden, der ebenfalls die Steuergeräte versorgen kann und auch zum Laden der Starterbatterie dient. Der DC/DC-Wandler wird aus der Hochspannungsbatterie gespeist. Der DC/DC-Wandler vermag lediglich die mittlere erforderliche Leistung der Steuergeräte bereitzustellen. Insbesondere das ABS benötigt bspw. bei Notbremsungen sehr hohe Ströme von bis zu 100 A. Um diese Strompeaks abzudecken wird ebenfalls auf die Starterbatterie zurückgegriffen. Die Verwendung zweier Batterien ist jedoch teuer und aufwändig. Ebenso ist eine Auslegung des DC/DC-Wandlers für höhere Ströme zu kostspielig.

US 2004/0130214 A1 offenbart ein spannungs-umschaltbares Kraftfahrzeug-Elektrosystem, das einen Generator zum Erzeugen einer ersten Nennspannung an einem ersten Spannungsbus und einen bidirektionalen DC / DC-Wandler zum Umwandeln der ersten Nennspannung in eine zweite Nennspannung an einem zweiten Spannungsbus umfasst, wobei die zweite Nennspannung niedriger als die erste Nennspannung ist. Eine Batterie, die mit dem ersten Spannungsbus gekoppelt ist und wählbar mit dem zweiten Spannungsbus gekoppelt sein kann, ist in der Lage, Strom für Lasten auf sowohl dem ersten Spannungsbus als auch dem zweiten Spannungsbus bereitzustellen.

US 3 343 073 A offenbart eine geregelte Stromversorgung, die als Spannungsquelle eine Hauptquelle und eine mit der Hauptquelle in Reihe geschaltete Hilfsquelle umfasst. Halbleiterschalter werden verwendet, um die Verbindungen zwischen einer Last und der Haupt- und Hilfsquelle in Übereinstimmung mit den an die Lasten angelegten Spannungen zu regeln. Die Hilfsquelle kann bezüglich der Hauptquelle mit gleichen Polaritäten, als sogenannte Endzelle, oder mit entgegengesetzten Polaritäten, als sogenannte entgegengerichtete Spannungszelle, verbunden werden.

### ZUSAMMENFASSUNG

Es ist eine Aufgabe der vorliegenden Erfindung eine verbesserte elektronische Steuerung bzw. Regelung der Strom- bzw. Spannungsversorgung eines mindestens teilweise elektrisch angetriebenen Fahrzeugs, ein mindestens teilweise elektrisch angetriebenes Fahrzeug mit einer verbesserten Steuerung bzw. Regelung und verbesserte Verfahren zur Steuerung bzw. Regelung der Strom- bzw. Spannungsversorgung elektrisch getriebener Fahrzeuge bereitzustellen, welche die Nachteile der bekannten Steuerungen bzw. Regelungen ausräumen.

Gemäß einem Aspekt der vorliegenden Erfindung wird demnach eine elektronische Vorrichtung für ein zumindest teilweise elektrisch angetriebenes Fahrzeug bereitgestellt.

Bei dem Fahrzeug kann es sich um ein Elektro- oder Hybridfahrzeug handeln. Das Fahrzeug weist einen elektrischen Energiespeicher (auch Batterie oder Akku) auf, der für den Antrieb des Fahrzeuges vorgesehen ist. Der Energiespeicher umfasst in Reihe geschaltete Energiespeicherzellen. Ferner weist das Fahrzeug einen an den Energiespeicher gekoppelten Spannungswandler (bspw. DC/DC-Wandler) zur Versorgung weiterer elektrischer Verbraucher des Fahrzeugs auf. Der Spannungswandler wird aus dem Energiespeicher gespeist.

Die elektronische Vorrichtung ist vorteilhaft ausgestaltet, um aus einer Anzahl in Reihe geschalteter Energiespeicherzellen des elektrischen Energiespeichers, die kleiner ist als die maximale Anzahl in Reihe geschalteter Energiespeicherzellen des Energiespeichers, mindestens einen der weiteren elektrischen Verbraucher des Fahrzeugs in dem Fall mit Strom (auch als Ersatz- oder Zusatzstrom bezeichnet) zu versorgen, in dem ein Maximalstrom (maximaler Strom) für den mindestens einen weiteren elektrischen Verbraucher, den maximalen aus dem Spannungswandler verfügbaren Strom überschreitet. Die Begriffe "Maximalstrom" bzw. "maximaler Strom" betreffen hierbei sowohl den Betrag als auch die zeitliche Dauer des Stroms. Auf diese Art und Weise kann auf eine Ersatz- bzw. Startbatterie vollständig verzichtet werden.

Der Spannungswandler ist eingangsseitig an den Ausgangsknoten des Energiespeichers gekoppelt, der die bspw. die maximale, zumindest aber eine höhere Spannung zur Verfügung stellt, als diejenige, welche durch die Anzahl der in Reihe geschalteten Energiespeicherzellen für die Bereitstellung des Ersatzstromes entsteht. Die Strom- bzw. Spannungsversorgung mittels der elektronischen Vorrichtung erfolgt also unter Umgehung des Spannungswandlers. Der Spannungswandler muss somit keine zu hohen Spitzenströme oder Maximalströme bereitstellen.

Der Energiespeicher umfasst eine Mehrzahl in Reihe geschalteter Energiespeicherzellen. Durch die Reihenschaltung summieren sich die Spannungen der Energiespeicherzellen.

Die elektronische Vorrichtung kann auch den Energiespeicher und/oder den Spannungswandler umfassen.

Die elektronische Vorrichtung kann ferner ausgestaltet sein, um den Maximalstrom (maximalen Strom, Peak- oder Spitzenstrom) in Reaktion auf einen Lade- bzw. Entladezustand des Energiespeichers aus einer unterschiedlichen Anzahl in Reihe geschalteter Energiespeicherzellen bereitzustellen. Damit kann unterschiedlichen Ladezuständen des Energiespeichers bzw. der Energiespeicherzellen des Energiespeichers Rechnung getragen werden. Wenn der Spannungswandler also nicht in der Lage ist ausreichend Strom bereitzustellen, um die Spannung an einem Versorgungsknoten für die weiteren elektrischen Verbraucher aufrecht zu erhalten, oder anders gesagt, der von den Verbrauchern benötigte Strom zu groß wird, verringert sich die Spannung am Versorgungsknoten und die Versorgung der Verbraucher mit elektrischer Leistung findet direkt und ggf. zusätzlich aus den entsprechenden Energiespeicherzellen des Energiespeichers statt.

Die elektronische Vorrichtung kann ferner ausgestaltet sein, um den Maximalstrom in Reaktion auf den Lade- bzw. Entladezustand des Energiespeichers aus einer ersten Anzahl und einer zweiten Anzahl in Reihe geschalteter Energiespeicherzellen bereitzustellen, wobei die erste Anzahl von der zweiten Anzahl verschieden ist. Grundsätzlich können also unterschiedlich viele in Reihe geschaltete Energiespeicherzellen je nach erforderlichen minimalen und maximalen Spannungspegeln für die weiteren elektrischen Verbrauchern des Fahrzeugs genutzt werden.

Die erste Anzahl der Energiespeicherzellen kann sich von der zweiten Anzahl der Energiespeicherzellen um eine Energiespeicherzelle unterscheiden. Die Anzahl der Speicherzellen hängt allgemein vom Typ des Energiespeichers bzw. dem Typ der Energiespeicherzellen ab. Bei Verwendung von Li-Ion-Zellen ergibt die Differenz von einer Speicherzelle einen günstigen Spannungsbereich. Beispielsweise kann die erste Anzahl 3 und die zweite Anzahl 4 sein.

Die elektronische Vorrichtung kann ausgestaltet sein, um die Spannungs- bzw. Stromversorgung des mindestens einen weiteren elektrischen Verbrauchers von der ersten Anzahl in Reihe geschalteter Energiespeicherzellen auf die zweite, (größere) Anzahl in Reihe geschalteter Energiespeicherzellen umzuschalten, wenn eine Spannung über der ersten Anzahl in Reihe geschalteter Energiespeicherzellen einen unteren Grenzwert erreicht hat oder unterschreitet. Ferner kann die Vorrichtung ausgelegt sein, um die Spannungs- bzw. Stromversorgung des mindestens einen weiteren elektrischen Verbrauchers von der zweiten Anzahl in Reihe geschalteter Energiespeicherzellen auf die erste, kleinere Anzahl in Reihe geschalteter Energiespeicherzellen umzuschalten, wenn eine Spannung über der zweiten Anzahl in Reihe geschalteter Energiespeicherzellen einen oberen Grenzwert erreicht hat oder überschreitet. Dies ermöglicht es, die Versorgungspannung innerhalb eines zulässigen Bereiches zu halten.

Der obere Grenzwert kann zumindest zu einem wesentlichen Anteil von einer nominalen Ausgangsspannung des Spannungswandlers definiert werden. Wenn die Ausgangsspannung der elektronischen Vorrichtung am Versorgungsknoten für die Verbraucher also größer wird als der nominale geregelte Ausgangsspannungswert des Spannungswandlers (bspw. DC/DC-Wandler), kann auf eine geringere Anzahl von in Reihe geschalteten Energiespeicherzellen umgeschaltet werden. Der untere Grenzwert kann bspw. durch einen unteren Grenzwert für die notwendige Versorgungsspannung für den mindestens einen elektrischen Verbraucher festgelegt werden.

Die elektronische Vorrichtung kann einen Schalter, einer erste und eine zweite Diode und eine Steuereinheit umfassen. Somit kann die elektronische Vorrichtung äußerst kostengünstig und einfach aufgebaut sein, wobei sie bereits in dieser einfachen Form die wesentlich teurere Ersatzbatterie bzw. Starterbatterie überflüssig macht. Obwohl hier der Begriff "Steuereinheit" verwendet wird, umfasst diese Steuereinheit insbesondere auch Regelfunktionen, da diese Einheit Ausgangssignale in Reaktion auf Eingangssignale bereitstellt. Insoweit kann anstelle des Begriffs "Steuereinheit" auch "Regeleinheit" verwendet werden.

Eine erste Diode kann zwischen einen ersten Ausgangsknoten des Energiespeichers und einen Versorgungsknoten gekoppelt sein. Der erste Ausgangsknoten weist eine erste Spannung auf, die der Summe der Einzelspannungen der ersten Anzahl in Reihe geschalteter Energiespeicherzellen entspricht. Der Versorgungsknoten kann an die weiteren bzw. den mindestens einen weiteren zu versorgenden Verbraucher gekoppelt sein. Die erste Diode ist in Durchflussrichtung vom ersten Ausgangsknoten zum Versorgungsknoten gekoppelt. Mit anderen Worten ist die Anode der ersten Diode an den ersten Ausgangsknoten gekoppelt und die Kathode der ersten Diode ist an den Versorgungsknoten gekoppelt. Die zweite Diode kann zwischen einen zweiten Ausgangsknoten des Energiespeichers und den Versorgungsknoten gekoppelt sein, wobei der zweite Ausgangsknoten eine zweite Spannung aufweist, die der Summe der Einzelspannungen der zweiten Anzahl in Reihe geschalteter Energiespeicherzellen entspricht. Die zweite Diode ist also in Durchflussrichtung vom zweitem Ausgangsknoten zum Versorgungsknoten gekoppelt, oder anders ausgedrückt, die Anode der zweiten Diode ist an den zweiten Ausgangsknoten und die Kathode der zweiten Diode ist an den Versorgungsknoten gekoppelt. Der mindestens eine Schalter ist zwischen die zweite Diode und den zweiten Ausgangsknoten gekoppelt.

Die Steuereinheit kann allgemein eingerichtet sein, um mindestens einen elektrischen Pfad durch eine der Dioden in Reaktion auf einen Lade- bzw. Entladezustand des Energiespeichers zu öffnen (unterbrechen) oder zu schließen (leitfähig zu machen). Die Steuerschaltung kann dann beispielsweise so eingerichtet sein, dass der Schalter eingeschaltet wird, wenn und solange die zweite Ausgangsspannung kleiner wird bzw. ist als die Versorgungsspannung und geöffnet (ausgeschaltet bzw. unterbrochen) wird, wenn und solange die zweite Ausgangsspannung größer wird bzw. ist als die Versorgungsspannung. Die erste Ausgangsspannung kann dann über eine der Dioden dauerhaft mit dem Versorgungsknoten gekoppelt bleiben. Auch hieran ist die geringe Komplexität und Effektivität der Schaltung zu erkennen.

Die Steuerschaltung kann als Komparatorschaltung (Komparator) ausgestaltet sein, deren erster (nicht-invertierender, positiver) Eingang an den zweiten Ausgangsknoten, und deren zweiter (invertierender, negativer) Eingang an den Versorgungsknoten gekoppelt sein kann. Der Ausgang der Komparatorschaltung kann funktional mit dem Schalter gekoppelt sein kann, um in Reaktion auf eine Spannungsdifferenz zwischen dem ersten Eingang und dem zweiten Eingang den Schalter zu schließen oder zu öffnen. Es ergibt sich also insgesamt eine Schaltung mit geringer Komplexität aber großer Wirkung für das Gesamtsystem.

Die Energiespeicherzellen können auch als Batterie- oder Akkuzellen bezeichnet werden. Bei den Energiespeicherzellen handelt es sich vorteilhaft um Li-Ion-Zellen. Die Spannung der Li-lon-Zellen liegt zwischen 2,8 V und 4,15 V, woraus sich die vorstehend beschriebenen vorteilhaften Aspekte und Ausgestaltungen der Erfindung ergeben können.

Der Energiespeicher kann für eine nominale Spannung von 60 V ausgelegt sein. Dabei handelt es sich um die Ausgangsspannung, die durch die maximale Anzahl in Reihe geschalteter Energiespeicherzellen bestimmt wird. Diese maximale bzw. nominale Ausgangsspannung wird für den elektrischen Antrieb des Fahrzeugs verwendet. Ferner ergibt sich bei einer Spannung im Bereich von 60 V (im Unterschied zu den auch üblichen 300 V) die Möglichkeit der galvanischen Kopplung der Massen des Energiespeichers und der weiteren elektrischen Verbraucher. Auch dies erleichtert den Aufbau.

Die Erfindung stellt ebenfalls ein Elektrofahrzeug oder Hybridfahrzeug, insbesondere Elektrozweirad oder Elektromotorrad bereit welches eine elektronische Vorrichtung gemäß einem oder mehreren der Aspekte und Ausgestaltungen dieser Beschreibung umfasst. Insbesondere umfasst das Elektrofahrzeug auch den Energiespeicher.

Die vorliegende Erfindung stellt ebenfalls ein Verfahren zur Regelung der Versorgung von elektrischen Verbrauchern eines zumindest teilweise elektrisch angetriebenen Fahrzeugs, insbesondere eines Elektro- oder Hybridfahrzeugs, bereit. Wie vorstehend beschrieben, weist das Fahrzeug einen elektrischen Energiespeicher auf, der für den Antrieb des Fahrzeuges vorgesehen ist, und in Reihe geschaltete Energiespeicherzellen umfasst. Ferner ist ein an den Energiespeicher gekoppelter Spannungswandler zur Versorgung weiterer elektrischer Verbraucher des Fahrzeugs vorgesehen. Gemäß dem Verfahren wird mindestens einer der weiteren elektrischen Verbraucher des Fahrzeugs aus einer Anzahl von Energiespeicherzellen des elektrischen Energiespeichers, die kleiner ist als die maximale Anzahl in Reihe geschalteter Energiespeicherzellen des Energiespeichers selektiv mit Strom versorgt. Dies geschieht in dem Fall, in dem ein Maximalstrom für den mindestens einen weiteren elektrischen Verbraucher, den maximalen aus dem mit dem Energiespeicher gekoppelten Spannungswandler verfügbaren Strom überschreitet.

### KURZE BESCHREIBUNG DER FIGUREN

Weitere Aspekte und Vorteile der Erfindung ergeben sich aus der nachfolgenden Beschreibung von Ausführungsbeispielen der Erfindung anhand der beigefügten Figuren, wobei:
FIG. 1 eine vereinfachte schematische Blockdarstellung eines Systems gemäß dem Stand der Technik ist,
FIG. 2 eine vereinfachte schematische Blockdarstellung eines Systems gemäß einen Ausführungsbeispiel ist,
FIG. 3 eine vereinfachte schematische Darstellung eines Ausführungsbeispiels ist,
FIG. 4 eine vereinfachte schematische Darstellung einer Schaltung gemäß einem Ausführungsbeispiel ist, und
FIG. 5 eine vereinfachte schematische Darstellung einer Schaltung gemäß einem Ausführungsbeispiel ist.

### AUSFÜHRLICHE BESCHREIBUNG DER AUSFÜHRUNGSBEISPIELE

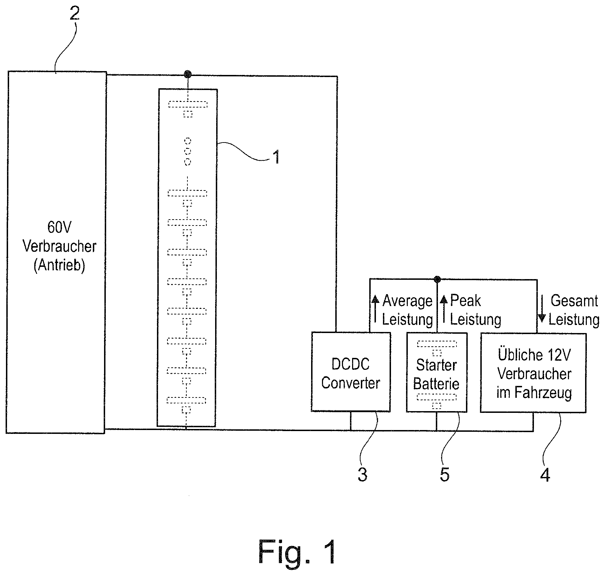

FIG. 1 ist eine vereinfachte schematische Blockdarstellung eines Systems gemäß dem Stand der Technik. Gezeigt ist ein Energiespeicher 1, ein Verbraucher 2 (Antrieb eines elektrisch angetriebenen Fahrzeugs), und ein Spannungswandler bzw. DC/DC-Wandler 3, der an den Energiespeicher 1 gekoppelt ist und die Versorgung der weiteren elektrischen Verbraucher 4 des Fahrzeugs übernimmt. Ferner ist eine Starterbatterie 5 gezeigt, welche die Spitzenströme für die Verbraucher 4 bereitstellt, wenn diese Ströme nicht mehr vom DC/DC Wandler erbracht werden können.

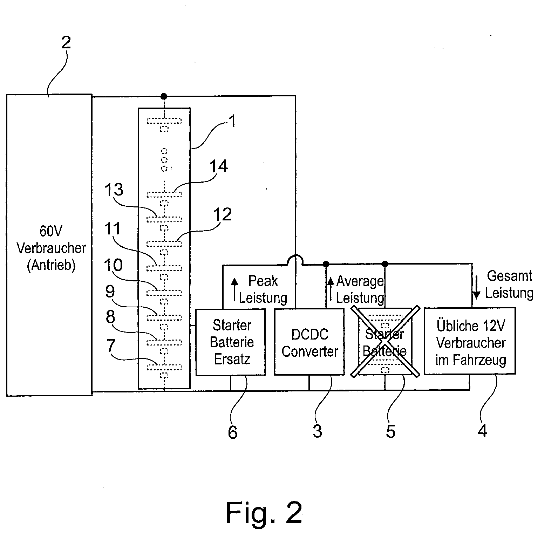

FIG. 2 zeigt eine vereinfachte schematische Darstellung eines Ausführungsbeispiels. Auch hier sind ein Energiespeicher 1, ein Verbraucher bzw. Antrieb 2 (Antrieb eines elektrisch angetriebenen Fahrzeugs), und ein Spannungswandler bzw. DC/DC-Wandler 3 vorgesehen, der an den Energiespeicher 1 gekoppelt ist und die Versorgung der weiteren elektrischen Verbraucher 4 des Fahrzeugs übernimmt. Die Starterbatterie 5 ist nun nicht mehr erforderlich. Stattdessen wird die Ersatz- bzw. Zusatzstrom- und Spannungsversorgung von der elektronischen Vorrichtung 6 übernommen. Die elektronische Vorrichtung 6 stellt nun die erforderlichen Spitzenströme für die Verbraucher 4 bereit, wenn diese nicht mehr vom DC/DC Wandler 3 erbracht werden können. Die elektronische Vorrichtung 6 ist an eine Anzahl von Energiespeicherzellen (hier einige mit den Bezugszahlen 7 - 14 gekennzeichnet) gekoppelt, die in Reihe geschaltet sind.

Eine Situation, in der Spitzenströme benötigt werden, kann bspw. bei einer Notfallbremsung auftreten. Der mindestens eine elektrische Verbraucher ist dann bspw. ein Antiblockiersystem (ABS), das kurzzeitig Ströme bis zu 100 A benötigen kann. Der Spannungswandler 3 ist hierfür nicht ausgelegt. Deshalb ist gemäß der Erfindung hierfür eine Versorgung unmittelbar aus den Energiespeicherzellen 7 - 14 etc. des Energiespeichers 1 vorgesehen.

Die elektronisch Vorrichtung 6 ist ausgestaltet, um aus einer Anzahl in Reihe geschalteter Energiespeicherzellen (bspw. 7, 8, 9 aus 7 bis 14 etc.) des elektrischen Energiespeichers 1, die kleiner ist als die maximale Anzahl in Reihe geschalteter Energiespeicherzellen des Energiespeichers 1, mindestens einen der weiteren elektrischen Verbraucher 4 des Fahrzeugs in dem Fall mit elektrischer Leistung bzw. elektrischem Strom zu versorgen, in dem ein Maximalstrom (maximaler Strom) für den mindestens einen weiteren elektrischen Verbraucher 4, den maximalen aus dem Spannungswandler (DC/DC-Wandler 3) verfügbaren Strom überschreitet.

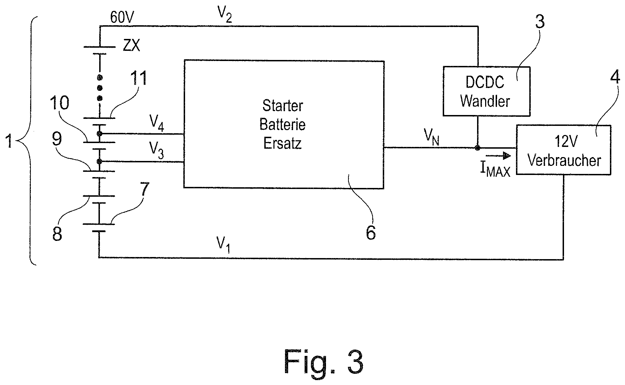

FIG. 3 eine vereinfachte schematische Darstellung eines Ausführungsbeispiels der elektronischen Vorrichtung 6 bzw. deren Ankopplung an den Energiespeicher 1. Demnach ist die elektronische Vorrichtung oder auch Schaltung 6 eingangsseitig an den Knoten V3 gekoppelt. An diesem Knoten besteht einen Spannung, die sich aus der Reichenschaltung der drei Energiespeicherzellen 7, 8 und 9 ergibt. Es handelt sich bei V3 also um die Summe der Spannungen der drei Energiespeicherzellen 7, 8 und 9. Die Vorrichtung 6 ist eingangsseitig ebenfalls an den Knoten V4 gekoppelt. An diesem liegt die Summe der Spannungen der Energiespeicherzellen 7, 8, 9 und 10 an. Somit liegen an der elektronischen Vorrichtung zwei Teilspannungen V3 und V4 an, die jeweils der Summe der Spannungen von drei Energiespeicherzellen bzw. vier Energiespeicherzellen entsprechen. Der Ausgang der elektronischen Vorrichtung 6 ist an einen Versorgungsknoten VN gekoppelt. An diesen Versorgungsknoten VN ist ebenfalls der Ausgang des DC/DC-Wandlers 3 gekoppelt. Außerdem werden die elektrischen Verbraucher 4 von diesem Versorgungsknoten VN gespeist. Der Energiespeicher 1 und die Verbraucher 4 haben eine gemeinsame Masse V1. Die maximale Ausgangsspannung aufgrund der maximalen Anzahl von in Reihe geschalteten Energiespeicherzellen 7, 8, 9, 10, 11...ZX liegt am Knoten V2 an. Im vorliegenden Ausführungsbeispiel handelt es sich bei dieser Spannung um nominal 60 V. Der DC/DC-Wandler ist eingangsseitig an diesen Knoten V2 gekoppelt. Vermag der DC/DC-Wandler einen erforderlichen Strom IMAX für die Verbraucher 4 nicht bereitzustellen, wird dieser - zumindest anteilig - von der elektronischen Vorrichtung 6 bereitgestellt, die ihre Spannung und den erforderlichen Strom aus den in Reihe geschalteten Energiespeicherzellen 7 bis 10 bezieht. Die Anzahl der Energiespeicherzellen 7 bis 10 ist kleiner als die maximale Anzahl in Reihe geschalteter Energiespeicherzellen 7 bis ZX des Energiespeichers 1. Aufgrund dessen sind natürlich auch die Spannungen (Teilspannungen) V3 und V4 kleiner als die Spannung am Knoten V2.

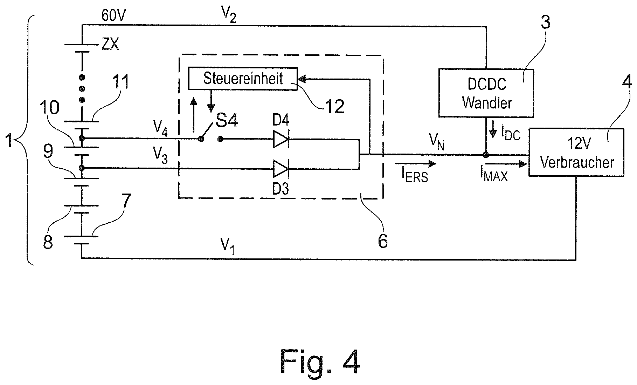

FIG. 4 zeigt ein vereinfachtes schematisches Schaltbild eines Ausführungsbeispiels. Die elektronische Vorrichtung 6 umfasst einen Schalter S4, einer erste Diode D3 und eine zweite Diode D4 und eine Steuereinheit 12. Obwohl hier der Begriff "Steuereinheit" verwendet wird, leistet diese Einheit insbesondere Regelfunktionen, wie sich aus der nachfolgenden Beschreibung ebenfalls ergibt. Die erste Diode D3 ist zwischen den ersten Ausgangsknoten V3 des Energiespeichers 1 und den Versorgungsknoten VN gekoppelt. Der erste Ausgangsknoten V3 weist eine erste Spannung auf, die der Summe der Einzelspannungen der ersten Anzahl (hier 3) in Reihe geschalteter Energiespeicherzellen 7, 8, 9 entspricht. Der Versorgungsknoten VN ist an die weiteren zu versorgenden Verbraucher 4 gekoppelt bzw. die Verbraucher 4 sind an diesen Knoten VN angeschlossen. Die erste Diode D3 ist in Durchflussrichtung vom ersten Ausgangsknoten V3 zum Versorgungsknoten VN gekoppelt. Die Anode der ersten Diode D3 ist an den ersten Ausgangsknoten V3 und die Kathode der ersten Diode D3 ist an den Versorgungsknoten VN gekoppelt. Die zweite Diode D4 ist zwischen den zweiten Ausgangsknoten V4 des Energiespeichers 1 und den Versorgungsknoten VN gekoppelt. Der zweite Ausgangsknoten weist eine zweite Spannung V4 auf, die der Summe der Einzelspannungen der zweiten Anzahl (hier vier) in Reihe geschalteter Energiespeicherzellen 7 bis 10 entspricht. Die zweite Diode D4 ist also in Durchflussrichtung vom zweiten Ausgangsknoten zum Versorgungsknoten VN gekoppelt. Mit anderen Worten, die Anode der zweiten Diode D4 ist an den zweiten Ausgangsknoten V4 und die Kathode der zweiten Diode D4 ist an den Versorgungsknoten VN gekoppelt Der Schalter S4 liegt zwischen der Anode der zweiten Diode D4 und dem zweiten Ausgangsknoten V4. In diesem Zusammenhang wird auch klar, das "Koppeln" im Sinne dieser Beschreibung nicht ausschließt, dass noch weitere Komponenten zwischen zwei gekoppelten Komponenten vorliegen. Die Steuereinheit 12 ist eingangsseitig mindestens mit dem Versorgungsknoten VN gekoppelt. Vorzugsweise ist ein weiterer Eingang der Steuereinheit 12 mit dem zweiten Ausgangsknoten V4 gekoppelt. Die Steuereinheit 12 ist ferner eingerichtet um den Schalter S4 zwischen einer geschlossenen (leitend) und einer geöffneten (nicht leitend) Position umzuschalten. Dazu ist ein Ausgang des Steuerschaltung 12 mit dem Schalter S4 gekoppelt Die Steuerschaltung 12 ist allgemein eingerichtet, um mindestens einen elektrischen Pfad durch eine der Dioden D3, D4 in Reaktion auf einen Lade- bzw. Entladezustand des Energiespeichers 1 zu öffnen (unterbrechen) oder zu schließen (leitfähig zu machen). Im vorliegenden Fall ist dieser Pfad der Strompfad durch die zweite Diode D4. Natürlich wären auch anderen Konstellationen, insbesondere mit mehreren Schaltern vorstellbar.

Wie in FIG. 3 liegt die maximale Spannung des Energiespeichers 1 aufgrund der maximalen Anzahl von in Reihe geschalteten Energiespeicherzellen 7 bis ZX am Knoten V2 und beträgt in diesem Ausführungsbeispiel 60 V. Die gemeinsame Masse des Energiespeichers 1 und der Verbraucher 4 ist V1.

Wenn der Strom IDC am Ausgang des DC/DC-Wandlers 3 nicht ausreicht um die Verbraucher 4 zu versorgen (IMAX), dann wird zumindest die Differenz von der Vorrichtung 6 in Form des Ersatz- bzw. Zusatzstroms IERS bereitgestellt (IERS=IMAX-IDC). Wenn die Spannung am ersten Ausgangsknoten V3 nicht ausreicht, wenn die Spannung V3 also aufgrund des Ladezustandes des Energiespeichers 1 und seiner Energiespeicherzellen 7 bis 9 zu gering ist, dann schaltet die Steuerschaltung 12 den Schalter S4 in den leitenden Zustand. Dadurch wird eine Verbindung zwischen dem zweiten Ausgangsknoten V4 und dem Versorgungsknoten VN über die Diode D4 hergestellt und die Spannung am Versorgungsknoten VN kann dadurch erhöht werden.

Im Normalbetrieb stellt der Spannungswandler 3 die Versorgungsspannung am Versorgungsknoten bereit. Diese Spannung kann z.B. 14V betragen. Im Normalbetrieb kann der Spannungswandler 3 ausreichend Strom zur Verfügung stellen um alle Verbraucher 4 zu versorgen. Der Schalter S4 ist ausgeschaltet (unterbrochen), und die Spannung am Knoten V3 ist bspw. 11V. In dieser Konstellation, fließt kein Strom durch D3. Denn die Spannung an der Anode (V3=11V) niedriger ist als an der Kathode (VN=14V). Steigt der Stromverbrauch der Verbraucher 4 über den maximal vom Spannungswandler bereitzustellenden Strom, bspw. bei einer ABS-Vollbremsung kann der Spannungswandler 3 diesen Strom nicht liefern. Die Spannung am Knoten VN bricht dann zusammen (nimmt ab). Wenn dieser Spannungseinbruch groß genug ist, wenn bspw. die Spannung VN von 14 V bricht auf 10 V einbricht, dann wird die Diode D3 leitend, da nun an der Anode eine höhere Spannung liegt (11V) als an der Kathode (10V). Damit fließt zusätzlicher Strom aus dem Knoten V3 (also den Energiespeicherzellen 7, 8 und 9) wodurch verhindert wird, dass die Spannung an VN weiter abnimmt. Dabei wird vorausgesetzt, dass die Verbraucher bei einer Spannung unterhalb der Spannung des Spannungswandlers (hier 14 V) noch regulär arbeiten. Mann könnte in diesem bspw. annehmen, dass die Verbraucher 4 bei eine Spannung bis zu einer unteren Grenz von bspw. 9 V betrieben werden können. Insgesamt bedeutet dies auch, dass die Spannung an der Anoden der Diode D3 immer kleiner ist als die reguläre Versorgungsspannung durch den Spannungswandler 3 von 14 V. Damit wirkt die Schaltung sehr schnell unterstützend, wenn ein Spannungseinbruch am Knoten VN auftritt. Dadurch dass die Spannung an V3 (also über die Reihenschaltung der Energiespeicherzellen 7, 8 und 9) immer kleiner ist als die reguläre Ausgangsspannung des Spannungswandlers im Normalbetrieb wird auch verhindert, dass dauerhaft ein Strom von den Energiespeicherzellen 7, 8, 9 zu den Verbrauchern 4 fließt. Die ausgewählten Energiespeicherzellen (also im vorliegenden Beispiel die unteren 3 oder 4 Zellen) sollen nur in Notfall belastet werden, da sich sonst eine asymmetrische Belastung des Energiespeichers ergeben würde.

Nur wenn die Spannung V3 zu niedrig wird, z.B. 8 V, und somit den unteren Grenzwert für die erforderliche Betriebsspannung für die Verbraucher 4 (hier also 9 V) unterschreitet, wird der Schalter S4 eingeschaltet. Damit wird die Spannung um hier bspw. eine Energiespeicherzellenspannung (der Zelle 10) erhöht, wodurch die Spannung an VN wieder über der Mindestbetriebsspannung liegt. Es liegt die Spannung V4-VD am Versorgungsknoten VN an. Diese Spannung ist höher als die von V3 bereitgestellte Spannung, da die Anzahl der in Reihe geschalteten Energieversorgungszellen für V4 größer ist als die Anzahl der in Reihe geschalteten Zellen für V3. Die Diode D3 verhindert dabei ein zurückfließen von Strom in den Energiespeicher 1. Alternativ könnte der Strompfad durch D3 auch durch einen weiteren Schalter unterbrochen werden. Natürlich verhindert auch die Diode D4 das zurückfließen von Strom, wenn der Schalter S4 geschlossen ist und die Spannung am Versorgungsknoten VN, bspw. aufgrund des DC/DC-Wandlers größer werden sollte, als die Spannung V4.

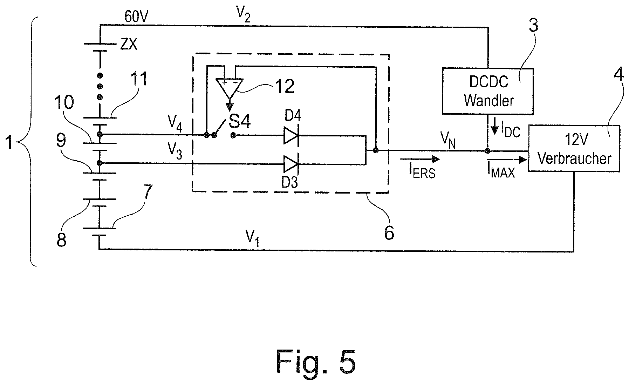

FIG. 5 zeigt im Wesentlichen das Ausführungsbeispiel gemäß FIG. 4, wobei hier nun die Steuerschaltung 12 als Komparatorschaltung bzw. Komparator ausgeführt ist. Der erste (nicht-invertierende, positive) Eingang des Komparators 12 ist an den zweiten Ausgangsknoten V4, und der zweite (invertierende, negative) Eingang des Komparators ist an den Versorgungsknoten VN gekoppelt Der Ausgang des Komparators 12 ist funktional mit dem Schalter S4 gekoppelt, um in Reaktion auf eine Spannungsdifferenz V4-VN zwischen dem ersten Eingang und dem zweiten Eingang des Komparators den Schalter S4 zu schließen oder zu öffnen.

Somit kann die Steuerschaltung 12 vorteilhaft so eingerichtet sein, dass der Schalter S4 eingeschaltet (leitend) wird, wenn und solange die Spannung V4 kleiner wird/ist als VN und geöffnet (also nicht leitend) wird, wenn und solange die Spannung V4 größer wird/ist als VN.

In einem Ausführungsbeispiel könnte es sich bei den Energiespeicherzellen um Li-Ion-Zellen (Lithium-Ionen Zellen) handeln, die jeweils eine Spannung zwischen 2,8 V (entladen) und 4,15 V (vollständig geladen) aufweisen. Die erste Ausgangsspannung V3 wird von den drei Energiespeicherzellen 7 bis 9 bereitgestellt und könnte demnach zwischen 8,4 V und 12,45 V liegen (also entsprechend der Summe der drei Einzelspannungen gemäß maximalem und minimalem Wert der Zellen bei entladenem und geladenem Zustand). Die zweite Ausgangsspannung V4 liegt demnach zwischen 11,2 V und 16,6 V. Der DC/DC-Wandler könnte unabhängig davon auf eine Ausgangsspannung am Knoten VN von 14 V geregelt werden. Wenn die Boardnetzspannung (Versorgungsspannung) am Knoten VN nicht kleiner als 9V (unterer Grenzwert) und nicht größer als 16V werden darf, dann ergibt sich folgende Situation:
Würde im entladenen Zustand der Energiespeicherzellen 7, 8, und 9 die Ausgangsspannung V3 verwendet würde bei einer Diodendurchgangsspannung VD=0,7 V eine Spannung VN = V3-VD=8,4 V-0,7 V=7,7 V am Versorgungknoten anliegen. Das wäre zu gering und würde unterhalb des unteren Grenzwertes UG=9 V liegen. Daher muss der Schalter in diesem Fall (also wenn die Spannung V3 kleiner wird als 9,7 V) der Schalter S4 geschlossen werden, wodurch die Spannung VN nun durch die zweite Ausgangsspannung V4 bestimmt wird. Die Versorgungsspannung würde dann im schlimmsten Fall VN= V4-VD = 11,2V - 0,7 V = 10,5 V betragen und somit oberhalb des unteren Grenzwertes UG=9 V liegen (also im zulässigen Bereich).

Wenn der Energiespeicher 1 voll geladen ist, wäre die Ausgangsspannung V4 zwar 16,6 V, und die Spannung am Versorgungsknoten VN=V4-VD=15,9 V und damit theoretisch noch im zulässigen Bereich für die Boardnetzspannung. Allerdings läge die Spannung an VN damit über der Ausgangsspannung des DC/DC-Wandlers von 14 V. Deshalb sollte bei einer zweiten Ausgangsspannung V4 die größer ist als die geregelte Ausgangsspannung des DC/DC-Wandlers plus die Diodendurchgangsspannung VD (in diesem Beispiel 14,7 V) der Schalter S4 wieder geöffnet werden, wodurch die erste Ausgangsspannung V3 über die Diode D3 die Spannung VN im Notfall definieren kann. Im vorliegenden Fall wären das 12,45 V - 0,7 V = 11,75 V. Aus diesen Überlegungen ergibt sich für den oberen Grenzwert OG der Spannung für V4, OG=VDC+VD, d.h. der obere Spannungsgrenzwert wird bestimmt durch die Summe aus der geregelten Ausgangsspannung VDC für den DC/DC-Wandler plus die Diodendurchgangsspannung VD.

Zwar könnte in diesem Ausführungsbeispiel auch eine separate Überwachung der Spannung am Knoten V3 erfolgen, dies ist jedoch hier nicht zwingend erforderlich. Im vorliegenden Fall benötigt man keine separate Überwachung der Spannung V3. Der Schalter S4 wird eingeschaltet, wenn V4 unter VN liegt, ganz gleich wie hoch die Spannung an V3 ist. Wenn also V4 > VN und VN auf normaler Betriebsspannung durch den Spannungswandler 3 ist (also hier bspw. 14V), dann gilt: V3=V4-1xZellenspannung (also die Spannung an V3 ist dann automatisch eine Energiespeicherzellenspannung kleiner als V4 und damit größer als der untere Grenzwert für die Betriebsspannung (also die Mindestbetriebsspannung von 9V wird von V3 dann erreicht bzw. überschritten. Daher benötigt man hier keine zusätzliche Überwachung der Spannung an V3 um den Schalter S4 zu steuern. In einem abgewandelten Ausführungsbeispiel wäre die Überwachung von V3 und eine entsprechende zusätzliche Ansteuerung des Schalters S4 allerdings möglich.

Insofern wird gemäß den Aspekten und Ausführungsbeispielen ein selektives Versorgen mit Strom (auch Ersatz- oder Zusatzstrom) mindestens eines der weiteren elektrischen Verbraucher des Fahrzeugs aus einer Anzahl von Energiespeicherzellen des elektrischen Energiespeichers, die kleiner ist als die maximale Anzahl in Reihe geschalteter Energiespeicherzellen des Energiespeichers ermöglicht; und zwar in dem Fall, in dem ein Maximalstrom für die weiteren elektrischen Verbraucher, den maximalen aus einem mit dem Energiespeicher gekoppelten Spannungswandler verfügbaren Strom überschreitet. Wenn der Spannungswandler also nicht in der Lage ist ausreichend Strom bereitzustellen, um die Spannung am Versorgungsknoten aufrecht zu erhalten, oder anders gesagt, der von den Verbrauchern benötigte Strom zu groß wird, verringert sich die Spannung am Versorgungsknoten zwangsläufig so lange, bis die Versorgung direkt aus den entsprechenden Energiespeicherzellen stattfindet.

Die zuvor beschriebenen elektronischen Vorrichtungen und Verfahren können vorteilhaft in Elektrofahrzeugen oder Hybridfahrzeugen, insbesondere Elektrozweirädern oder Elektromotorrädern verwendet werden.

## Patentansprüche

1. Elektronische Vorrichtung (6) für ein zumindest teilweise elektrisch angetriebenes Fahrzeug, welches einen elektrischen Energiespeicher (1), der für den Antrieb (2) des Fahrzeuges vorgesehen ist und eine Mehrzahl von in Reihe geschalteten Energiespeicherzellen umfasst, und einen an den Energiespeicher (1) gekoppelten Spannungswandler zur Versorgung mindestens eines weiteren elektrischen Verbrauchers des Fahrzeugs aufweist, und wobei die Vorrichtung (6) ausgestaltet ist, um aus einer Anzahl in Reihe geschalteter Energiespeicherzellen des elektrischen Energiespeichers (1), die kleiner ist als die maximale Anzahl in Reihe geschalteter Energiespeicherzellen des Energiespeichers (1), mindestens einen der weiteren elektrischen Verbraucher des Fahrzeugs in dem Fall mit Strom zu versorgen, in dem ein Maximalstrom für den mindestens einen weiteren elektrischen Verbraucher, den maximalen aus dem Spannungswandler (3) verfügbaren Strom überschreitet, wobei die Vorrichtung (6) ferner ausgestaltet ist, um den Maximalstrom in Reaktion auf den Lade- bzw. Entladezustand des Energiespeichers aus einer ersten Anzahl und einer zweiten Anzahl in Reihe geschalteter Energiespeicherzellen bereitzustellen, wobei die erste Anzahl von der zweiten Anzahl verschieden ist und wobei die erste und die zweite Anzahl jeweils kleiner als die maximale Anzahl in Reihe geschalteter Energiespeicherzellen des Energiespeichers (1) sind, wobei die Vorrichtung (6) ausgelegt ist, um die Spannungs- bzw. Stromversorgung des mindestens einen weiteren elektrischen Verbrauchers von der ersten Anzahl in Reihe geschalteter Energiespeicherzellen auf die zweite, größere Anzahl in Reihe geschalteter Energiespeicherzellen umzuschalten, wenn eine Spannung über der ersten Anzahl in Reihe geschalteter Energiespeicherzellen einen unteren Grenzwert erreicht hat oder unterschreitet, wobei die Vorrichtung (6) ausgelegt ist, um die Spannungs- bzw. Stromversorgung des mindestens einen weiteren elektrischen Verbrauchers von der zweiten Anzahl in Reihe geschalteter Energiespeicherzellen auf die erste, kleinere Anzahl in Reihe geschalteter Energiespeicherzellen umzuschalten, wenn eine Spannung über der zweiten Anzahl in Reihe geschalteter Energiespeicherzellen einen oberen Grenzwert erreicht hat oder überschreitet, **gekennzeichnet dadurch, dass** der obere Grenzwert zumindest zu einem wesentlichen Anteil von einer nominalen Ausgangsspannung des Spannungswandlers (3) definiert wird.

2. Elektronische Vorrichtung (6) nach Anspruch 1 welche ferner ausgestaltet ist, um den Maximalstrom in Reaktion auf einen Lade- bzw. Entladezustand des Energiespeichers (1) aus einer unterschiedlichen Anzahl in Reihe geschalteter Energiespeicherzellen bereitzustellen.

3. Elektronische Vorrichtung (6) nach einem der vorhergehenden Ansprüche, wobei sich die erste Anzahl der Energiespeicherzellen von der zweiten Anzahl der Energiespeicherzellen um eine Energiespeicherzelle unterscheidet.

4. Elektronische Vorrichtung (6) nach Anspruch 3, wobei die erste Anzahl 3 und die zweite Anzahl 4 ist.

5. Elektronische Vorrichtung (6) nach einem der vorstehenden Ansprüche, wobei die elektronische Vorrichtung (6) einen Schalter, einer erste und eine zweite Diode und eine Steuereinheit (12) umfasst.

6. Elektronische Vorrichtung (6) nach Anspruch 5, wobei eine erste Diode (D3) zwischen einen ersten Ausgangsknoten (V3) des Energiespeichers (1) und einen Versorgungsknoten gekoppelt ist, wobei der erste Ausgangsknoten eine erste Spannung aufweist, die der Summe der Einzelspannungen der ersten Anzahl in Reihe geschalteter Energiespeicherzellen entspricht und der Versorgungsknoten an die weiteren zu versorgenden Verbraucher gekoppelt ist. (erste Diode in Flussrichtung von erstem Ausgangsknoten und Versorgungsknoten, Anode erste Diode (D3) an ersten Ausgangsknoten (V3), Kathode erste Diode (D3) an Versorgungsknoten (VN))

7. Elektronische Vorrichtung (6) nach Anspruch 6, wobei die zweite Diode (D4) zwischen einen zweiten Ausgangsknoten (V4) des Energiespeichers (1) und den Versorgungsknoten gekoppelt ist, wobei der zweite Ausgangsknoten eine zweite Spannung aufweist, die der Summe der Einzelspannungen der zweiten Anzahl in Reihe geschalteter Energiespeicherzellen entspricht. (zweite Diode (D4) in Flussrichtung von zweitem Ausgangsknoten und Versorgungsknoten, Anode zweite Diode an zweiten Ausgangsknoten, Kathode zweite Diode an Versorgungsknoten).

8. Elektronische Vorrichtung (6) nach Anspruch 7, wobei der mindestens eine Schalter (S4) zwischen die zweite Diode (D4) und den zweiten Ausgangsknoten (V4) gekoppelt ist.

9. Elektronische Vorrichtung (6) nach einem der Ansprüche 5 bis 8, wobei die Steuereinheit (12) eingerichtet ist, um mindestens einen elektrischen Pfad durch eine der Dioden in Reaktion auf einen Lade- bzw. Entladezustand des Energiespeichers (1) zu öffnen oder zu schließen.

10. Elektronische Vorrichtung (6) nach Anspruch 8 oder 9, wobei die Steuerschaltung (12) als Komparatorschaltung ausgestaltet ist, deren erster (nicht-invertierender, positiver) Eingang an den zweiten Ausgangsknoten, und deren zweiter Eingang an den Versorgungsknoten (VN) gekoppelt ist, und deren Ausgang funktional mit dem Schalter gekoppelt ist, um in Reaktion auf eine Spannungsdifferenz zwischen dem ersten Eingang und dem zweiten Eingang den Schalter zu schließen oder zu öffnen.

11. Elektronische Vorrichtung (6) nach einem der Ansprüche 9 oder 10, wobei die Steuerschaltung (12) so eingerichtet sein, dass der Schalter eingeschaltet wird, wenn und solange die zweite Ausgangsspannung kleiner wird bzw. ist als die Versorgungsspannung und geöffnet wird, wenn und solange die zweite Ausgangsspannung größer wird bzw. ist als die Versorgungsspannung.

12. Elektronische Vorrichtung (6) nach einem der vorstehenden Ansprüche, wobei die Energiespeicherzellen Li-Ion-Zellen sind.

13. Elektronische Vorrichtung (6) nach einem der vorstehenden Ansprüche, wobei der Energiespeicher für eine nominale maximale Spannung von 60 V ausgelegt ist.

14. Elektrofahrzeug oder Hybridfahrzeug, insbesondere Elektrozweirad oder Elektromotorrad umfassend eine Elektronische Vorrichtung (6) nach einem der vorstehenden Ansprüche.

15. Verfahren zur Regelung der Versorgung von elektrischen Verbrauchern eines zumindest teilweise elektrisch angetriebenen Fahrzeugs, insbesondere eines Elektro- oder Hybridfahrzeugs, welches einen elektrischen Energiespeicher (1) aufweist, der für den Antrieb des Fahrzeuges vorgesehen ist, und eine Mehrzahl von in Reihe geschalteten Energiespeicherzellen aufweist, wobei die Vorrichtung (6) einen an den Energiespeicher (1) gekoppelten Spannungswandler (3) zur Versorgung weiterer elektrischer Verbraucher des Fahrzeugs umfasst, und das Verfahren die folgenden Schritte umfasst: Selektives Versorgen mit Strom mindestens eines der weiteren elektrischen Verbraucher des Fahrzeugs aus einer Anzahl von Energiespeicherzellen des elektrischen Energiespeichers (1), die kleiner ist als die maximale Anzahl in Reihe geschalteter Energiespeicherzellen des Energiespeichers (1), in dem Fall, in dem ein Maximalstrom für den mindestens einen weiteren elektrischen Verbraucher den maximalen aus dem Spannungswandler (3) verfügbaren Strom überschreitet, wobei das Verfahren ferner umfasst:
- Bereitstellen des Maximalstroms in Reaktion auf den Lade- bzw. Entladezustand des Energiespeichers aus einer ersten Anzahl und einer zweiten Anzahl in Reihe geschalteter Energiespeicherzellen, wobei die erste Anzahl von der zweiten Anzahl verschieden ist und wobei die erste und die zweite Anzahl jeweils kleiner als die maximale Anzahl in Reihe geschalteter Energiespeicherzellen des Energiespeichers (1) sind,
- Umschalten der Spannungs- bzw. Stromversorgung des mindestens einen weiteren elektrischen Verbrauchers von der ersten Anzahl in Reihe geschalteter Energiespeicherzellen auf die zweite, größere Anzahl in Reihe geschalteter Energiespeicherzellen, wenn eine Spannung über der ersten Anzahl in Reihe geschalteter Energiespeicherzellen einen unteren Grenzwert erreicht hat oder unterschreitet,
- Umschalten der Spannungs- bzw. Stromversorgung des mindestens einen weiteren elektrischen Verbrauchers von der zweiten Anzahl in Reihe geschalteter Energiespeicherzellen auf die erste, kleinere Anzahl in Reihe geschalteter Energiespeicherzellen, wenn eine Spannung über der zweiten Anzahl in Reihe geschalteter Energiespeicherzellen einen oberen Grenzwert erreicht hat oder überschreitet, **gekennzeichnet dadurch, dass**
der obere Grenzwert zumindest zu einem wesentlichen Anteil von einer nominalen Ausgangsspannung des Spannungswandlers (3) definiert wird.

## Claims

1. Electronic device (6) for an at least partially electrically driven vehicle having an electrical energy store (1), which is provided for the drive system (2) of the vehicle and comprises a plurality of series-connected energy storage cells, and a voltage converter coupled to the energy store (1) for the supply of at least one further electrical load of the vehicle, and wherein the device (6) is designed to supply current to at least one of the further electrical loads of the vehicle, from a number of series-connected energy storage cells of the electrical energy store (1) which is smaller than the maximum number of series-connected energy storage cells of the energy store (1) in the event that a maximum current for the at least one further electrical load exceeds the maximum current available from the voltage converter (3), wherein the device (6) is also designed to provide the maximum current in response to the state of charge or discharge of the energy store from a first number and a second number of series-connected energy storage cells, wherein the first number is different to the second number and wherein the first and the second number are each lower than the maximum number of series-connected energy storage cells of the energy store (1), wherein the device (6) is designed to switch over the voltage or current supply of the at least one further electrical load from the first number of series-connected energy storage cells to the second and larger number of series-connected energy storage cells if a voltage across the first number of series-connected energy storage cells has reached or falls below a lower limiting value, wherein the device (6) is designed to switch over the voltage or current supply of the at least one further electrical load from the second number of series-connected energy storage cells to the first and smaller number of series-connected energy storage cells if a voltage across the second number of series-connected energy storage cells has reached or exceeds an upper limiting value, **characterized in that** the upper limiting value is at least in a significant proportion defined by a nominal output voltage of the voltage converter (3).

2. Electronic device (6) according to Claim 1, which is also designed to deliver the maximum current, in response to a state of charge or discharge of the energy store (1), from a different number of series-connected energy storage cells.

3. Electronic device (6) according to one of the preceding claims, wherein the first number of energy storage cells differs from the second number of energy storage cells by one energy storage cell.

4. Electronic device (6) according to Claim 3, wherein the first number is 3 and the second number is 4.

5. Electronic device (6) according to one of the preceding claims, wherein the electronic device (6) comprises a switch, a first and a second diode, and a control unit (12).

6. Electronic device (6) according to Claim 5, wherein a first diode (D3) is coupled between a first output node point (V3) of the energy store (1) and a supply node point, wherein the first output node point has a first voltage, which corresponds to the sum of the individual voltages of the first number of series-connected energy storage cells, and the supply node point is coupled to the further loads to be supplied (first diode in the direction of flow from first output node point and supply node point, anode first diode (D3) to first output node point (V3), cathode first diode (D3) to supply node point (VN)).

7. Electronic device (6) according to Claim 6, wherein the second diode (D4) is coupled between a second output node point (V4) of the energy store (1) and the supply node point, wherein the second output node point has a second voltage, which corresponds to the sum of the individual voltages of the second number of series-connected energy storage cells (second diode (D4) in the direction of flow from second output node point and supply node point, anode second diode to second output node point, cathode second diode to supply node point).

8. Electronic device (6) according to Claim 7, wherein the at least one switch (S4) is coupled between the second diode (D4) and the second output node point (V4).

9. Electronic device (6) according to one of Claims 5 to 8, wherein the control unit (12) is designed for the opening or closing of at least one electrical conduction path through one of the diodes in response to a state of charge or discharge of the energy store (1).

10. Electronic device (6) according to Claim 8 or 9, wherein the control circuit (12) is configured as a comparator circuit, the first (non-inverting, positive) input of which is coupled to the second output node point, and the second input of which is coupled to the supply node point (VN), and the output of which is functionally coupled to the switch, in order to effect the opening or closing of the switch in response to a voltage difference between the first input and the second input.

11. Electronic device (6) according to one of Claims 9 and 10, wherein the control circuit (12) is designed such that the switch is closed if and for such time as the second output voltage becomes or is smaller than the supply voltage, and is opened if and for such time as the second output voltage becomes or is greater than the supply voltage.

12. Electronic device (6) according to one of the preceding claims, wherein the energy storage cells are lithium-ion cells.

13. Electronic device (6) according to one of the preceding claims, wherein the energy store is designed for a maximum rated voltage of 60 V.

14. Electric vehicle or hybrid vehicle, in particular a two-wheeled electric vehicle or an electrically powered motorcycle, comprising an electronic device (6) according to one of the preceding claims.

15. Method for the regulation of the supply of electrical loads in an at least partially electrically driven vehicle, in particular an electric or hybrid vehicle, having an electrical energy store (1), which is provided for the drive system of the vehicle and comprises a plurality of series-connected energy storage cells, wherein the device (6) comprises a voltage converter (3) coupled to the energy store (1) for the supply of further electrical loads of the vehicle, and the method comprises the following steps: the selective current supply to at least one of the further electrical loads of the vehicle from a number of energy storage cells of the electrical energy store (1) which is smaller than the maximum number of series-connected energy storage cells of the energy store (1) in the event that a maximum current for the at least one further electrical load exceeds the maximum current available from the voltage converter (3), wherein the method also comprises:
- providing the maximum current in response to the state of charge or discharge of the energy store from a first number and a second number of series-connected energy storage cells, wherein the first number is different to the second number and wherein the first and the second number are each lower than the maximum number of series-connected energy storage cells of the energy store (1),
- switching over the voltage or current supply of the at least one further electrical load from the first number of series-connected energy storage cells to the second and larger number of series-connected energy storage cells if a voltage across the first number of series-connected energy storage cells has reached or falls below a lower limiting value,
- switching over the voltage or current supply of the at least one further electrical load from the second number of series-connected energy storage cells to the first and smaller number of series-connected energy storage cells if a voltage across the second number of series-connected energy storage cells has reached or exceeds an upper limiting value, **characterized in that** the upper limiting value is at least in a significant proportion defined by a nominal output voltage of the voltage converter (3).

## Revendications

1. Dispositif électronique (6) pour un véhicule à propulsion au moins partiellement électrique, lequel possède un accumulateur d'énergie (1) électrique, qui est prévu pour la propulsion (2) du véhicule et comporte une pluralité de cellules d'accumulateur d'énergie branchées en série, et un convertisseur de tension connecté à l'accumulateur d'énergie (1) servant à l'alimentation d'au moins un récepteur électrique supplémentaire du véhicule, et le dispositif (6) étant configuré pour alimenter en courant au moins l'un des récepteurs électriques supplémentaires du véhicule à partir d'un nombre de cellules d'accumulateur d'énergie de l'accumulateur d'énergie (1) électrique branchées en série, qui est inférieur au nombre maximal de cellules d'accumulateur d'énergie branchées en série de l'accumulateur d'énergie (1), dans le cas où un courant maximal pour l'au moins un récepteur électrique supplémentaire dépasse le courant maximal disponible en provenance du convertisseur de tension (3), le dispositif (6) étant en outre configuré pour fournir le courant maximal à partir d'un premier nombre et d'un deuxième nombre de cellules d'accumulateur d'énergie branchées en série en réaction à l'état de charge ou de décharge de l'accumulateur d'énergie, le premier nombre étant différent du deuxième nombre et les premier et deuxième nombres étant respectivement inférieurs au nombre maximal de cellules d'accumulateur d'énergie branchées en série de l'accumulateur d'énergie (1), le dispositif (6) étant conçu pour permuter l'alimentation en tension ou en courant de l'au moins un récepteur électrique supplémentaire du premier nombre de cellules d'accumulateur d'énergie branchées en série au deuxième nombre, plus grand, de cellules d'accumulateur d'énergie branchées en série lorsqu'une tension aux bornes du premier nombre de cellules d'accumulateur d'énergie branchées en série a atteint ou est devenue inférieure à une valeur limite basse, le dispositif (6) étant conçu pour permuter l'alimentation en tension ou en courant de l'au moins un récepteur électrique supplémentaire du deuxième nombre de cellules d'accumulateur d'énergie branchées en série au premier nombre, plus petit, de cellules d'accumulateur d'énergie branchées en série lorsqu'une tension aux bornes du deuxième nombre de cellules d'accumulateur d'énergie branchées en série a atteint ou a dépassé une valeur limite haute, **caractérisé en ce que** la valeur limite haute est définie au moins pour une part essentielle par une tension de sortie nominale du convertisseur de tension (3).

2. Dispositif électronique (6) selon la revendication 1, lequel est en outre configuré pour fournir le courant maximal à partir d'un nombre différent de cellules d'accumulateur d'énergie branchées en série en réaction à un état de charge ou de décharge de l'accumulateur d'énergie (1).

3. Dispositif électronique (6) selon l'une des revendications précédentes, le premier nombre de cellules d'accumulateur d'énergie se différenciant du deuxième nombre de cellules d'accumulateur d'énergie par une cellule d'accumulateur d'énergie.

4. Dispositif électronique (6) selon la revendication 3, le premier nombre étant de 3 et le deuxième nombre de 4.

5. Dispositif électronique (6) selon l'une des revendications précédentes, le dispositif électronique (6) comportant un commutateur, une première et une deuxième diode et une unité de commande (12).

6. Dispositif électronique (6) selon la revendication 5, une première diode (D3) étant connectée entre un premier nœud de sortie (V3) de l'accumulateur d'énergie (1) et un nœud d'alimentation, le premier nœud de sortie présentant une première tension qui correspond à la somme des tensions individuelles du premier nombre de cellules d'accumulateur d'énergie branchées en série et le nœud d'alimentation étant connecté aux récepteurs supplémentaires à alimenter (la première diode dans le sens du flux du premier nœud de sortie et du nœud d'alimentation, l'anode de la première diode (D3) au premier nœud de sortie (V3), la cathode de la première diode (D3) au nœud d'alimentation (VN)).

7. Dispositif électronique (6) selon la revendication 6, la deuxième diode (D4) étant connectée entre un deuxième nœud de sortie (V4) de l'accumulateur d'énergie (1) et le nœud d'alimentation, le deuxième nœud de sortie présentant une deuxième tension qui correspond à la somme des tensions individuelles du deuxième nombre de cellules d'accumulateur d'énergie branchées en série (la deuxième diode (D4) dans le sens du flux du deuxième nœud de sortie et du nœud d'alimentation, l'anode de la deuxième diode au deuxième nœud de sortie, la cathode de la deuxième diode au nœud d'alimentation).

8. Dispositif électronique (6) selon la revendication 7, l'au moins un commutateur (S4) étant connecté entre la deuxième diode (D4) et le deuxième nœud de sortie (V4).

9. Dispositif électronique (6) selon l'une des revendications 5 à 8, l'unité de commande (12) étant conçue pour ouvrir ou fermer au moins un trajet électrique à travers l'une des diodes en réaction à un état de charge ou de décharge de l'accumulateur d'énergie (1).

10. Dispositif électronique (6) selon la revendication 8 ou 9, le circuit de commande (12) étant configuré en tant que circuit comparateur dont la première entrée (positive, non inverseuse) est connectée au deuxième nœud de sortie et dont la deuxième entrée est connectée au nœud d'alimentation (VN), et dont la sortie est connectée fonctionnellement au commutateur afin de fermer ou d'ouvrir le commutateur en réaction à une différence de tension entre la première entrée et la deuxième entrée.

11. Dispositif électronique (6) selon l'une des revendications 9 ou 10, le circuit de commande (12) étant conçu de telle sorte que le commutateur est mis en circuit lorsque et tant que la deuxième tension de sortie devient ou est inférieure à la tension d'alimentation et est ouvert lorsque et tant que la deuxième tension de sortie devient ou est supérieure à la tension d'alimentation.

12. Dispositif électronique (6) selon l'une des revendications précédentes, les cellules d'accumulateur d'énergie étant des cellules aux ions de lithium.

13. Dispositif électronique (6) selon l'une des revendications précédentes, l'accumulateur d'énergie étant conçu pour une tension maximale nominale de 60 V.

14. Véhicule électrique ou véhicule hybride, notamment deux-roues électrique ou motocyclette électrique comprenant un dispositif électronique (6) selon l'une des revendications précédentes.

15. Procédé de régulation de l'alimentation de récepteurs électriques d'un véhicule à propulsion au moins partiellement électrique, notamment d'un véhicule électrique ou hybride, lequel possède un accumulateur d'énergie (1) électrique, qui est prévu pour la propulsion du véhicule et possède un pluralité de cellules d'accumulateur d'énergie branchées en série, le dispositif (6) comportant un convertisseur de tension (3) connecté à l'accumulateur d'énergie (1) servant à l'alimentation de récepteurs électriques supplémentaires du véhicule, et le procédé comprenant les étapes suivantes : alimentation sélective en courant d'au moins l'un des récepteurs électriques supplémentaires du véhicule à partir d'un nombre de cellules d'accumulateur d'énergie de l'accumulateur d'énergie (1) électrique, qui est inférieur au nombre maximal de cellules d'accumulateur d'énergie branchées en série de l'accumulateur d'énergie (1), dans le cas où un courant maximal pour l'au moins un récepteur électrique supplémentaire dépasse le courant maximal disponible en provenance du convertisseur de tension (3), le procédé comprenant en outre :
- la fourniture du courant maximal à partir d'un premier nombre et d'un deuxième nombre de cellules d'accumulateur d'énergie branchées en série en réaction à l'état de charge ou de décharge de l'accumulateur d'énergie, le premier nombre étant différent du deuxième nombre et les premier et deuxième nombres étant respectivement inférieurs au nombre maximal de cellules d'accumulateur d'énergie branchées en série de l'accumulateur d'énergie (1),
- permutation de l'alimentation en tension ou en courant de l'au moins un récepteur électrique supplémentaire du premier nombre de cellules d'accumulateur d'énergie branchées en série au deuxième nombre, plus grand, de cellules d'accumulateur d'énergie branchées en série lorsqu'une tension aux bornes du premier nombre de cellules d'accumulateur d'énergie branchées en série a atteint ou est devenue inférieure à une valeur limite basse,
- permutation de l'alimentation en tension ou en courant de l'au moins un récepteur électrique supplémentaire du deuxième nombre de cellules d'accumulateur d'énergie branchées en série au premier nombre, plus petit, de cellules d'accumulateur d'énergie branchées en série lorsqu'une tension aux bornes du deuxième nombre de cellules d'accumulateur d'énergie branchées en série a atteint ou a dépassé une valeur limite haute, **caractérisé en ce que** la valeur limite haute étant définie au moins pour une part essentielle par une tension de sortie nominale du convertisseur de tension (3).
